# EUROPEAN PATENT APPLICATION

(11) **EP 3 713 372 A1**
(43) Date of publication of application: **23.09.2020**
(21) Application number: 18882367.8
(22) Date of filing: 30.11.2018
(51) Int. Cl.: H04W 84/18

(54) **METHOD AND DEVICE FOR CREATING USER GROUP**

(30) Priority: 30.11.2017 CN 201711238230
(71) Applicant: Huawei Technologies Co., Ltd., Longgang District Shenzhen, Guangdong 518129 (CN)
(72) Inventor: WANG, Yuan, Shenzhen Guangdong 518129 (CN); CHEN, Zhongping, Shenzhen Guangdong 518129 (CN); XU, Changchun, Shenzhen Guangdong 518129 (CN)
(74) Representative: Maiwald Patent- und Rechtsanwaltsgesellschaft mbH
(86) International application number: PCT/CN2018/118655
(87) International publication number: WO 2019/105470

(57) **Abstract**

This application provides a user group establishment method and an apparatus. The method includes: After receiving a first message from a communications device, a user group management function network element generates an identifier of a user group based on the first message, and sends the generated identifier of the user group to a terminal by using a communications network element, so that the user group of the terminal is established in a 3GPP network, and the generated identifier of the user group is sent to the communications device. This method does not need to rely on deployment of an external application server, and therefore is more flexible.

## Description

This application claims priority to Chinese Patent Application No. 201711238230.1, filed with the National Intellectual Property Administration, PRC on November 30, 2017 and entitled "USER GROUP ESTABLISHMENT METHOD AND APPARATUS", which is incorporated herein by reference in its entirety.

### TECHNICAL FIELD

This application relates to the field of mobile communications technologies, and in particular, to a user group establishment method and an apparatus.

### BACKGROUND

With development of communications technologies, a virtual local area network service (virtual local area network service, virtual LAN service) needs to be supported in a 5th generation (5th Generation, 5G) network. To be specific, the 5G network needs to provide a plurality of types of transmission services for terminals in a set, for example, a service that is based on the internet protocol (Internet Protocol, IP) between networks, a service that is based on the Ethernet (Ethernet), or a service that is based on another non-IP technology, to ensure mutual communication between the terminals in the set.

At present, for an IP service provided by the traditional 3rd generation partnership project (3rd Generation Partnership Project, 3GPP), a server (Server)-client (Client) mode is used, and a server is used as a proxy to perform forwarding to complete mutual communication between clients. For example, for a WeChat application, a user A sends a WeChat message to a user B by using a 3rd generation partnership project (3rd Generation Partnership Project, 3GPP) network. The 3GPP network first sends an IP data packet (including the WeChat message) of the user A to a WeChat application server outside the 3GPP network. The WeChat application server determines that the WeChat message is sent to the user B, and then sends the IP data packet to the user B by using the 3GPP network again, to implement mutual communication between the user A and the user B.

The communication between terminals is implemented by using the server-client mode. The method has a main problem: This method needs to rely on deployment of an external application server, and is not flexible enough.

### SUMMARY

This application provides a user group establishment method and an apparatus, to flexibly establish a user group.

According to a first aspect, this application provides a user group establishment method. The method may be performed by a user group management function network element or a chip in a user group management function network element. The procedure includes: receiving, by a user group management function network element, a first message from a communications device, where the first message includes a request type and an identifier of the communications device, and the request type is used to request to establish a user group; and generating, by the user group management function network element, an identifier of the user group, and sending the identifier of the user group to the communications device.

In the foregoing method, after receiving the first message, the user group management function network element may generate the identifier of the user group based on the first message, and send the generated identifier of the user group to a terminal by using a communications network element, so that the user group of the terminal is established in a 3GPP network, and the generated identifier of the user group is sent to the communications device. This method does not need to rely on deployment of an external application server, and therefore is more flexible.

In a possible implementation, the communications device is a first terminal or an application function device.

This application is applicable to a case in which the communications device is a terminal, and is also applicable to a case in which the communications device is an application function device.

In a possible implementation, the first message further includes a second terminal list, the second terminal list includes an identifier of at least one second terminal, and the identifier of the at least one second terminal is an identifier of a terminal needing to join the user group; and the method further includes: obtaining, by the user group management function network element, subscription data corresponding to the identifier of the second terminal from a unified data management network element; determining, by the user group management function network element based on the subscription data corresponding to the identifier of the second terminal, a third terminal list allowed to join the user group; and sending, by the user group management function network element, the third terminal list to the communications device.

In a possible implementation, when the communications device is the first terminal, the method further includes: obtaining, by the user group management function network element based on an identifier of the first terminal, subscription data corresponding to the identifier of the first terminal from the unified data management network element; and determining, by the user group management function network element based on the subscription data corresponding to the identifier of the first terminal, to allow the first terminal to use a user group service.

In a possible implementation, the method further includes: obtaining, by the user group management function network element, user group authentication information, where the user group authentication information is used to verify authorization of the terminal needing to join the user group; and sending, by the user group management function network element, the user group authentication information to the communications device.

In a possible implementation, the sending, by the user group management function network element, the identifier of the user group to the communications device includes: sending, by the user group management function network element, a second message to an access and mobility management function network element, where the second message includes the third terminal list and the identifier of the user group, and the second message is used to indicate the access and mobility management function network element to page a terminal corresponding to a terminal identifier in the third terminal list, and send the identifier of the user group to the terminal.

According to a second aspect, this application provides a user group establishment method. The method may be performed by a communications network element or a chip in a communications network element. The communications network element may be an access and mobility management function network element, a user plane network element, or a network exposure function network element. The method includes: receiving, by a communications network element, a first message from a communications device, where the first message includes a request type and an identifier of the communications device, and the request type is used to request to establish a user group; sending, by the communications network element, the first message to a user group management function network element; receiving, by the communications network element, an identifier that is of the user group and that is generated by the user group management function network element; and sending, by the communications network element, the identifier of the user group to the communications device.

In a possible implementation, the communications network element is an access and mobility management function network element, and the communications device is a first terminal; and the receiving, by a communications network element, a first message from a communications device includes: receiving, by the access and mobility management function network element, a first non-access stratum NAS message from the first terminal, where the first NAS message includes the first message; and the sending, by the communications network element, the identifier of the user group to the communications device includes: sending, by the access and mobility management function network element, a second NAS message to the first terminal, where the second NAS message includes the identifier of the user group.

In a possible implementation, the first NAS message further includes indication information, and the indication information is used to indicate a user group service; and the method further includes: determining, by the communications network element, a network function NF type based on the indication information; sending, by the communications network element, a query message to a network function repository function network element, where the query message includes the NF type; and receiving, by the communications network element, an access identifier of the user group management function network element from the network function repository function network element.

In a possible implementation, the communications network element is a user plane function network element, and the communications device is a first terminal; and the receiving, by a communications network element, a first message from a communications device includes: receiving, by the user plane network element, first user plane data from the first terminal, where the first user plane data packet includes the first message; and the sending, by the communications network element, the identifier of the user group to the communications device includes: sending, by the user plane function network element, second user plane data to the first terminal, where the second user plane data packet includes the identifier of the user group.

In a possible implementation, the communications network element is a network exposure function network element, and the communications device is an application function device; and the receiving, by a communications network element, a first message from a communications device includes: receiving, by the network exposure function network element, a first data packet from the application function device, where the first data packet includes the first message; and the sending, by the communications network element, the identifier of the user group to the communications device includes: sending, by the network capability exposure function network element, a second data packet to the first terminal, where the second data packet includes the identifier of the user group.

In a possible implementation, the first message further includes a second terminal list, the second terminal list includes an identifier of at least one second terminal, and the identifier of the at least one second terminal is an identifier of a terminal needing to join the user group; and the method further includes: sending, by the communications network element, a third terminal list to the terminal, where the third terminal list includes an identifier of a terminal that is in the second terminal and that is allowed to join the user group.

In a possible implementation, the communications network element is an access and mobility management function network element, and the method further includes:
obtaining, by the access and mobility management function network element, a third terminal list and the identifier of the user group that are from the user group management function network element, where the third terminal list includes an identifier of a terminal allowed to join the user group;
paging, by the access and mobility management function network element, the terminal corresponding to the terminal identifier in the third terminal list, and establishing a connection to the terminal; and sending, by the communications network element, the identifier of the user group to the terminal.

According to a third aspect, this application provides a user group establishment method. The method may be performed by a communications device or a chip in a communications device. The communications device may be a terminal or an application function device. The method includes: sending, by a communications device, a first message to a user group management function network element, where the first message includes a request type and an identifier of the communications device, and the request type is used to request to establish a user group; and receiving, by the communications device, an identifier that is of the user group and that is generated by the user group management function network element.

In a possible implementation, the first message further includes a second terminal list, the second terminal list includes an identifier of at least one second terminal, and the identifier of the at least one second terminal is an identifier of a terminal needing to join the user group; and the method further includes: receiving, by the communications device, a third terminal list from the user group management function network element, where the third terminal list includes an identifier of a terminal that is in the second terminal and that is allowed to join the user group.

In a possible implementation, the communications device is an application function device; and the method further includes: sending, by the communications device, the identifier of the user group to the terminal corresponding to the terminal identifier in the third terminal list.

In a possible implementation, the method further includes: receiving, by the communications device, user group authentication information from the user group management function network element, where the user group authentication information is used to verify authorization of the terminal needing to join the user group.

In a possible implementation, the communications device is a first terminal or an application function device.

According to a fourth aspect, this application provides an apparatus. The apparatus may be a user group management function network element, or may be a chip in a user group management function network element. The apparatus has functions of implementing various embodiments of the first aspect. The function may be implemented by hardware, or may be implemented by hardware executing corresponding software. The hardware or the software includes one or more modules corresponding to the foregoing functions.

In a possible design, when the apparatus is a user group management function network element, the user group management function network element includes a receiving unit, a sending unit, and a processing unit. The processing unit may be, for example, a processor, the receiving unit may be, for example, a receiver, and the sending unit may be, for example, a transmitter. The receiver and the transmitter each include a radio frequency circuit. Optionally, the user group management function network element further includes a storage unit, and the storage unit may be, for example, a memory. When the user group management function network element includes a storage unit, the storage unit stores a computer execution instruction, the processing unit is connected to the storage unit, and the processing unit executes the computer execution instruction stored in the storage unit, so that the user group management function network element performs the user group establishment method according to any one of the first aspect or the possible implementations of the first aspect.

In another possible design, when the apparatus is chip in a user group management function network element, the chip includes a receiving unit, a sending unit, and a processing unit. The processing unit may be, for example, a processing circuit. The receiving unit may be, for example, an input interface, a pin, a circuit, or the like. The sending unit may be, for example, an output interface, a pin, a circuit, or the like. The processing unit may execute a computer execution instruction stored in a storage unit, so that the user group establishment method according to any one of the first aspect or the possible implementations of the first aspect is performed. Optionally, the storage unit is a storage unit inside the chip, for example, a register or a cache, or the storage unit may be a storage unit that is outside the chip and that is in the user group management function network element, for example, a ROM, a static storage device of another type that may store static information and an instruction, or a RAM

The processor mentioned anywhere above may be a general purpose CPU, a microprocessor, an ASIC, or one or more integrated circuits for controlling program execution of the user group establishment method according to any one of the first aspect or the possible implementations of the first aspect.

According to a fifth aspect, this application provides an apparatus. The apparatus may be a communications network element, or may be a chip in a communications network element. The communications network element may be an access and mobility management function network element, a user plane function network element, or a network function repository function network element. The apparatus has functions of implementing various embodiments of the second aspect. The function may be implemented by hardware, or may be implemented by hardware executing corresponding software. The hardware or the software includes one or more modules corresponding to the foregoing functions.

In a possible design, when the apparatus is a communications network element, the communications network element includes a receiving unit, a sending unit, and a processing unit. The processing unit may be, for example, a processor, the receiving unit may be, for example, a receiver, and the sending unit may be, for example, a transmitter. The receiver and the transmitter each include a radio frequency circuit. Optionally, the communications network element further includes a storage unit, and the storage unit may be, for example, a memory. When the communications network element includes a storage unit, the storage unit stores a computer execution instruction, the processing unit is connected to the storage unit, and the processing unit executes the computer execution instruction stored in the storage unit, so that the communications network element performs the user group establishment method according to any one of the second aspect or the possible implementations of the second aspect.

In another possible design, when the apparatus is chip in a communications network element, the chip includes a receiving unit, a sending unit, and a processing unit. The processing unit may be, for example, a processing circuit. The receiving unit may be, for example, an input interface, a pin, a circuit, or the like. The sending unit may be, for example, an output interface, a pin, a circuit, or the like. The processing unit may execute a computer execution instruction stored in a storage unit, so that the user group establishment method according to any one of the second aspect or the possible implementations of the second aspect is performed. Optionally, the storage unit is a storage unit inside the chip, for example, a register or a cache, or the storage unit may be a storage unit that is outside the chip and that is in the communications network element, for example, a ROM, a static storage device of another type that may store static information and an instruction, or a RAM

The processor mentioned anywhere above may be a CPU, a microprocessor, an application-specific integrated circuit ASIC, or one or more integrated circuits for controlling program execution of the user group establishment method according to any one of the second aspect or the possible implementations of the second aspect.

According to a sixth aspect, this application provides an apparatus. The apparatus may be a communications device, or may be a chip in a communications device. The communications device may be a terminal or an application function device. The apparatus has functions of implementing various embodiments of the third aspect. The function may be implemented by hardware, or may be implemented by hardware executing corresponding software. The hardware or the software includes one or more modules corresponding to the foregoing functions.

In a possible design, when the apparatus is a communications device, the communications device includes a receiving unit, a sending unit, and a processing unit. The processing unit may be, for example, a processor, the receiving unit may be, for example, a receiver, and the sending unit may be, for example, a transmitter. The receiver and the transmitter each include a radio frequency circuit. Optionally, the communications device further includes a storage unit, and the storage unit may be, for example, a memory. When the communications device includes a storage unit, the storage unit stores a computer execution instruction, the processing unit is connected to the storage unit, and the processing unit executes the computer execution instruction stored in the storage unit, so that the communications device performs the user group establishment method according to any one of the third aspect or the possible implementations of the third aspect.

In another possible design, when the apparatus is chip in a communications device, the chip includes a receiving unit, a sending unit, and a processing unit. The processing unit may be, for example, a processing circuit. The receiving unit may be, for example, an input interface, a pin, a circuit, or the like. The sending unit may be, for example, an output interface, a pin, a circuit, or the like. The processing unit may execute a computer execution instruction stored in a storage unit, so that the user group establishment method according to any one of the third aspect or the possible implementations of the third aspect is performed. Optionally, the storage unit is a storage unit inside the chip, for example, a register or a cache, or the storage unit may be a storage unit that is outside the chip and that is in the communications device, for example, a ROM, a static storage device of another type that may store static information and an instruction, or a RAM

The processor mentioned anywhere above may be a CPU, a microprocessor, an application-specific integrated circuit ASIC, or one or more integrated circuits for controlling program execution of the user group establishment method according to any one of the third aspect or the possible implementations of the third aspect.

According to a seventh aspect, this application further provides a computer-readable storage medium. The computer-readable storage medium stores an instruction, and when the instruction is run on a computer, the computer is enabled to perform the method according to each of the foregoing aspects.

According to an eighth aspect, this application further provides a computer program product including an instruction. When the computer program product runs on a computer, the computer is enabled to perform the methods in the foregoing aspects.

According to a ninth aspect, this application further provides a system, including the communications network element and the user group management function network element that are in the foregoing method embodiments or apparatus embodiments. Optionally, the system further includes the communications device in the foregoing method embodiments or apparatus embodiments.

In addition, for technical effects brought by any implementation of the second aspect to the ninth aspect, refer to technical effects brought by different implementations of the first aspect. Details are not described herein again.

These aspects or other aspects in this application may be clearer and more intelligible in descriptions in the following embodiments.

### BRIEF DESCRIPTION OF DRAWINGS

FIG. 1 is a schematic diagram of a possible network architecture according to this application;
FIG. 2 is a schematic diagram of another possible network architecture according to this application;
FIG. 3 is a schematic diagram of another possible network architecture according to this application;
FIG. 4 is a flowchart of a user group establishment method according to this application;
FIG. 5 is a flowchart of another user group establishment method according to this application;
FIG. 6 is a flowchart of another user group establishment method according to this application;
FIG. 7 is a flowchart of another user group establishment method according to this application;
FIG. 8 is a flowchart of another user group establishment method according to this application;
FIG. 9 is a flowchart of another user group establishment method according to this application;
FIG. 10 is a flowchart of another user group establishment method according to this application;
FIG. 11 is a schematic diagram of an apparatus according to this application;
FIG. 12 is a schematic diagram of another apparatus according to this application;
FIG. 13 is a schematic diagram of another apparatus according to this application; and
FIG. 14 is a schematic diagram of another apparatus according to this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the description of this application, unless otherwise stated, "a plurality of" means two or more than two.

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that: With evolution of the network architecture and emergence of new service scenarios, the technical solutions provided in the embodiments of this application are also applicable to similar technical problems.

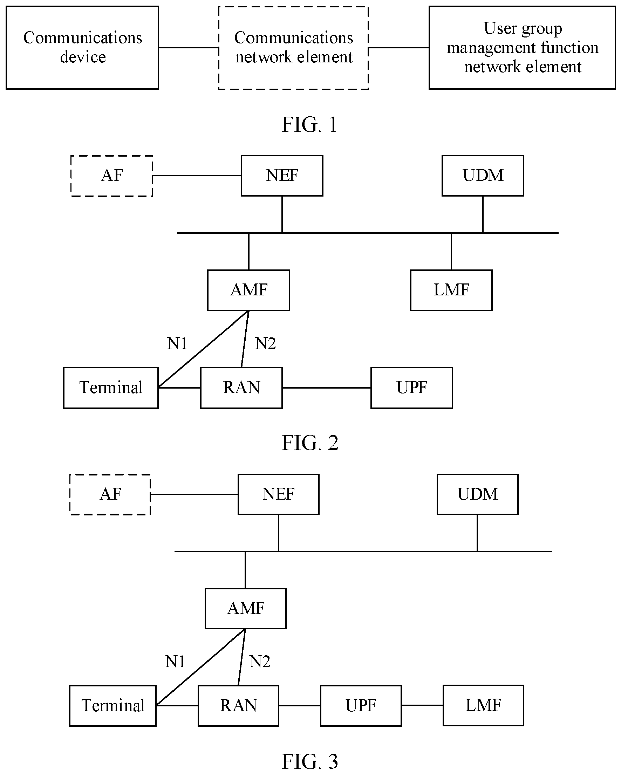

FIG. 1 is a schematic diagram of a possible network architecture to which this application is applicable. The network architecture includes a communications device and a user group management function network element. Optionally, the network architecture further includes a communications network element.

The communications device may be a terminal, or may be an application function (application function, AF) device. For ease of description, the AF device is subsequently used to represent the application function device. The communications device may be configured to request the user group management function network element to establish a user group, or request to pre-establish a user group.

The terminal is a device having a wireless transceiver function, may be deployed on land, and includes an indoor device, an outdoor device, a handheld device, or a vehicle-mounted device; or may be deployed on a water surface (such as on a ship); or may be deployed in air (such as in an aircraft, a balloon, and a satellite). The terminal may be a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home, or the like.

The AF device may be deployed by a vertical industry user, and may be, for example, an application server outside an enterprise network or an application server outside a 3GPP network in industrial control. The AF is mainly configured to provide a request, policy information, or the like of the application server to a 3GPP system. Information is exchanged and transferred between a third-party application (application) and the 3GPP system by using the AF device.

The user group management function network element may be, for example, a local area network management function (local area network management function, LMF) network element. The user group management network element may be configured to establish and manage a user group including a plurality of terminals, for example, allocate an identifier of the user group, establish associations between the identifier of the user group and identifiers of the terminals, and obtain user group authentication information.

The communications network element is configured to implement communication between the communications device and the user group management function network element. For example, the communications network element may be specifically configured to: send a request message to the user group management function network element based on a request of the communications device, or send a notification message to the communications device based on a notification of the user group management function network element. In this application, the communications network element may be an access and mobility management function (access and mobility management function, AMF) network element, a network exposure function (network exposure function, NEF) network element, a user plane function (user plane function, UPF) network element, or the like.

The AMF network element is responsible for access and mobility management of the terminal, and includes a mobility management function of a mobility management entity (mobility management entity, MME) in a network framework in long term evolution (long term evolution, LTE), and is configured with an access management function.

The NEF network element is responsible for securely providing a service and a capability, that are provided by the 3GPP network, to a third party such as the vertical industry user, edge computing, and the application server.

The UPF network element is a function network element of a user plane, and is mainly responsible for connecting to an external network. The UPF network element includes related functions of a serving gateway (serving gateway, SGW) and a public data network gateway (public data network GateWay, PDN-GW) in LTE.

It should be noted that the user group management function network element may be an independent network element, or may be a function module of an existing network element, including but not limited to a function template of an existing AMF network element, a function template of a policy control function (Policy Control Function, PCF) network element, or a function template of an SMF network element.

It may be understood that the foregoing functions may be network elements in a hardware device, software functions running on dedicated hardware, or virtualized functions instantiated on a platform (for example, a cloud platform).

For ease of description, subsequently in this application, the LMF network element is used to represent the user group management function network element, the AMF network element is used to represent the access and mobility management function network element, the UPF network element is used to represent the user plane function network element, and the NEF network element is used to represent the network exposure function network element. In addition, for ease of description, the LMF network element, the AMF network element, the UPF network element, and the NEF network element are respectively referred to as an LMF, an AMF, a UPF, and an NEF for short below.

FIG. 2 shows a specific system architecture based on the system architecture shown in FIG. 1. The system architecture includes a terminal, a radio access network (radio access network) device, a user plane network element of a core network, and a control plane network element of the core network. The user plane network element of the core network includes a UPF, and the control plane network element of the core network includes an AMF, an NEF, an LMF, and a unified data management network element.

The unified data management network element is configured to manage subscription data of the terminal. The unified data management network element may be a unified data management (Unified Data Management, UDM) network element or a subscription profile repository. In FIG. 2, an example in which the unified data management network element is a UDM network element is used for description. The UDM network element is referred to as a UDM for short.

The RAN device is a device that provides a wireless communication function for the terminal. The RAN device includes a base station. Specifically, the RAN device includes but is not limited to: a next generation NodeB (g nodeB, gNB), an evolved node B (evolved node B, eNB), a radio network controller (radio network controller, RNC), a NodeB (node B, NB), a base station controller (base station controller, BSC), a base transceiver station (base transceiver station, BTS), a home base station (for example, a home evolved NodeB or a home nodeB, HNB), a baseband unit (BaseBand Unit, BBU), a transmission reception point (transmitting and receiving point, TRP), a transmission point (transmitting point, TP), a mobile switching center, and the like in 5G.

The terminal communicates with the AMF through an N1 interface, and the RAN device communicates with the AMF through an N2 interface.

Optionally, the system architecture shown in FIG. 2 further includes an AF device, and the AF device may communicate with the NEF.

The communications device in the system architecture shown in FIG. 1 may be the AF device or the terminal in the system architecture shown in FIG. 2. The communications network element in the system architecture shown in FIG. 1 may be the AMF or the NEF in the system architecture shown in FIG. 2. The user group management function network element in the system architecture shown in FIG. 1 may be the LMF in the system architecture shown in FIG. 2.

In the system architecture shown in FIG. 2, a core network control plane uses a service-based architecture. To be specific, the NEF, the UDM, the AMF, the LMF, and the like in FIG. 2 each have a core network control function, and are mutually invoked through a service-based interface. In addition, the LMF is deployed on the control plane of the core network, and the LMF is configured to establish and manage a user group.

FIG. 3 shows another specific system architecture based on the system architecture shown in FIG. 1. A main difference between the system architecture and the system architecture shown in FIG. 2 lies in that an LMF is deployed on a user plane of a core network, for example, may be deployed after a UPF, and is configured to establish and manage a user group. The LMF can invoke, through a service-based interface, another network function of the core network, for example, an AMF or a UDM.

The communications device in the system architecture shown in FIG. 1 may be an AF device or a terminal in the system architecture shown in FIG. 3. The communications network element in the system architecture shown in FIG. 1 may be the UPF in the system architecture shown in FIG. 3. The user group management function network element in the system architecture shown in FIG. 1 may be the LMF in the system architecture shown in FIG. 3.

A user group establishment method provided in this application is specifically described below with reference to FIG. 1 to FIG. 3.

It should be noted that the embodiments of this application are not limited to the system architectures shown in FIG. 1 to FIG. 3, and may be further applied to another future communications system, for example, a sixth generation (the 6th generation, 6G) communications system architecture. In addition, names of the foregoing network elements that are used in this application may change while functions of the network elements may remain the same in a future communications system.

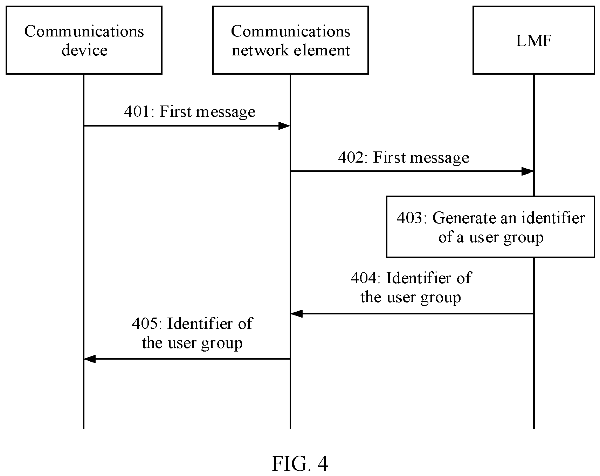

FIG. 4 is a flowchart of a user group establishment method according to this application. Interaction between a communications device, a communications network element, and an LMF is mainly described.

When the communications network element is an AMF or a UPF, the communications device is a terminal. When the communications network element is an NEF, the communications device is an AF device.

A procedure shown in FIG. 4 includes the following steps.

Step 401: The communications device sends a first message to the communications network element, and the communications network element receives the first message from the communications device.

The first message includes an identifier of the communications device and a request type, and the request type is used to request to establish a user group.

In an implementation, the request type is used to request a LAN service. The request type may be explicit information, or may be implicit information, for example, may be represented by using a name of the first message. For example, during specific implementation, the first message may be referred to as a LAN establishment request message, and a name of the message name indicates that the request type is requesting a LAN service.

In an alternative implementation, the first message may include the identifier of the communications device, and the first message may be used to indicate that the user group is requested to be established.

Step 402: The communications network element sends the first message to the LMF, and the LMF receives the first message from the communications network element.

After receiving the first message, the communications network element sends the first message to the LMF.

Step 403: The LMF generates an identifier of the user group.

After receiving the first message, the LMF network element generates the identifier of the user group. The identifier of the user group is used to identify the established user group.

Step 404: The LMF sends the identifier of the user group to the communications network element, and the communications network element receives the identifier of the user group from the LMF.

Step 405: The communications network element sends the identifier of the user group to the communications device, and the communications device receives the identifier of the user group from the communications network element.

According to step 401 to step 405, after the communications device sends the first message to the LMF by using the communications network element, the LMF may generate the identifier of the user group based on the first message, and send the generated identifier of the user group to a terminal by using the communications network element, so that the user group of the terminal is established in a 3GPP network, and the generated identifier of the user group is sent to the communications device. The method does not rely on deployment of an external application server, and therefore, is more flexible.

The following further describes the foregoing procedure in different cases.

Case 1: The communications device is a first terminal, and the communications network element is an AMF network element.

Case 1 may correspond to the system architecture shown in FIG. 1, or may correspond to the system architecture shown in FIG. 2. In other words, the LMF is connected to a control plane network element of the core network.

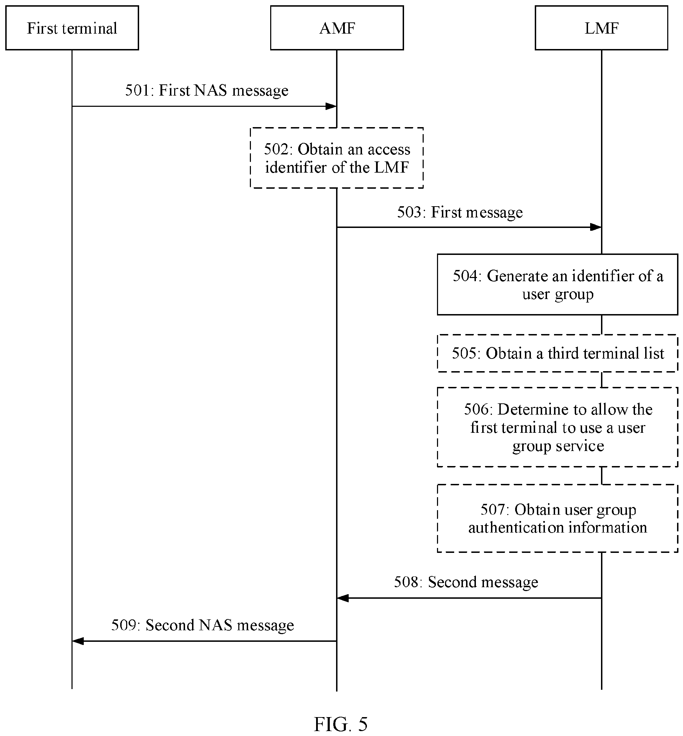

FIG. 5 is a flowchart of a user group establishment method according to this application. The method includes the following steps.

Step 501: A first terminal sends a first non-access stratum (non access stratum, NAS) message to an AMF, and the AMF receives the first NAS message from the first terminal.

The first NAS message includes the first message in step 401. The first message includes an identifier of the first terminal and a request type.

That is, step 501 is a specific implementation of step 401.

Further, the first message may further include a second terminal list, where the second terminal list includes one or more identifiers of one or more second terminals, and a terminal identifier in the second terminal list is an identifier of a terminal needing to join the user group.

For example, the second terminal list is {UE ID 2, UE ID 3, and UE ID 4}. UE 2, UE 3, and UE 4 may all be referred to as second terminals, and the UE ID 2, UE ID 3, and UE ID 4 are respectively an identifier of the UE 2, an identifier of the UE3, and an identifier of the UE 4.

Step 502: The AMF obtains an access identifier of an LMF

Step 502 is an optional step. If the first NAS message further includes indication information, and the indication information is used to indicate a user group service, the AMF may further obtain the access identifier of the LMF based on the indication information. Specifically, the AMF determines a network function (network function, NF) type based on the indication information, and then sends a query message to a network function repository function (NF repository function, NRF) network element. The query message includes the NF type determined by the AMF. The NRF network element obtains the access identifier of the LMF based on the received NF type. For example, the access identifier is an identifier of the LMF network element or an address of the LMF network element. Then, the NRF network element sends the obtained access identifier of the LMF to the AMF

Step 503: The AMF sends the first message to the LMF, and the LMF receives the first message from the AMF.

Step 504: The LMF generates an identifier of the user group.

After receiving the first message, the LMF determines, based on the request type in the first message, to establish the user group. Then, the LMF generates the identifier of the user group. For example, the identifier of the user group may be a group identifier or a LAN identifier, and specifically, may be a virtual DN name.

Step 505: The LMF obtains a third terminal list.

Step 505 is an optional step. If the first message includes the second terminal list, the LMF further obtains the third terminal list based on the second terminal list. Specifically, the LMF obtains, from a UDM, subscription data corresponding to the identifiers of the second terminals in the second terminal list, and then determines, based on the subscription data corresponding to the identifiers of the second terminals, the third terminal list allowed to join the user group. The third terminal list includes an identifier of a terminal allowed to join the user group. The terminal identifier included in the third terminal list is some or all of the terminal identifiers included in the second terminal list.

For example, the second terminal list is {UE ID 2, UE ID 3, and UE ID 4}. The LMF verifies each second terminal based on subscription data corresponding to the identifier of the second terminal in the second terminal list, to determine that the UE 2 and the UE 3 are terminals allowed to join the user group. In this case, the third terminal list is {UE ID 2 and UE ID 3}.

Further, the LMF may further establish and store a correspondence between the access identifier of the LMF network element and an identifier of the third terminal list. Alternatively, the LMF establishes and stores a correspondence between the access identifier of the LMF network element and the terminal identifier in the third terminal list.

Step 506: The LMF determines to allow the first terminal to use the user group service.

Step 506 specifically includes: The LMF obtains, from the UDM based on the identifier of the first terminal, subscription data corresponding to the identifier of the first terminal, and then determines, based on the subscription data corresponding to the identifier of the first terminal, to allow the first terminal to use the user group service.

Certainly, if the LMF determines, based on the subscription data corresponding to the identifier of the first terminal, that the first terminal is not allowed to use the user group service, the LMF needs to notify the first terminal that the first terminal is not allowed to use the user group service.

Step 507: The LMF obtains user group authentication information.

The user group authentication information is used to verify the authorization of the terminal needing to join the user group. To be specific, when subsequently requesting to join the user group, a terminal may carry the user group authentication information, so that the LMF may authenticate, based on the user group authentication information, whether the terminal requesting to join the user group is authorized.

In an implementation, the LMF may obtain the user group authentication information from a security management function network element.

It should be noted that there is no strict execution sequence among step 504, step 505, step 506, and step 507, and an actual execution sequence may be determined based on an actual requirement.

Step 508: The LMF sends a second message to the AMF, and the AMF receives the second message from the LMF.

The second message includes the identifier of the user group. Optionally, the second message further includes the third terminal list. Optionally, the second message further includes the user group authentication information.

The second message may be used to indicate the AMF to page a terminal corresponding to a terminal identifier in the third terminal list, and send the identifier of the user group to the paged terminal; or send the identifier of the user group and the user group authentication information to the paged terminal.

Step 509: The AMF sends a second NAS message to the first terminal, and the first terminal receives the second NAS message from the AMF.

Step 509 is a specific implementation of step 405.

The second NAS message includes the identifier of the user group. Optionally, the second NAS message further includes the third terminal list. Optionally, the second NAS message further includes the user group authentication information.

In a specific implementation, the second NAS message includes the second message. The second message includes the identifier of the user group. Optionally, the second message further includes the third terminal list. Optionally, the second message further includes the user group authentication information.

Further, between step 508 and step 509, or after step 509, the method further includes the following step.

The AMF pages the terminal corresponding to the terminal identifier in the third terminal list, establishes a connection to the paged terminal, and then sends the identifier of the user group to the paged terminal. Optionally, the AMF further sends the user group authentication information.

According to step 501 to step 509, the first terminal requests, by using the AMF, the LMF to establish the user group. After generating the identifier of the user group, the LMF sends the generated identifier of the user group to the first terminal by using the AMF. Further, the LMF may further obtain the user group authentication information, and send the user group authentication information to the first terminal by using the AMF. Further, the first terminal may further send the second terminal list to the LMF by using the AMF. In this case, the LMF may further obtain, based on the second terminal list, the third terminal list including an identifier of a terminal allowed to join the user group, and send the third terminal list to the first terminal by using the AMF. The LMF may further indicate the AMF to page the terminal corresponding to the terminal identifier in the third terminal list, and send the identifier of the user group and the user group authentication information to the paged terminal. In this way, a parameter required for requesting to join the user group is sent to the terminal allowed to join the user group, so that the terminal subsequently requests to join the user group. That is, the user group is established in a 3GPP network.

It should be noted that the user group authentication information has the following functions: After receiving the user group authentication information, the terminal device provides the user group authentication information when subsequently accessing the group, and the LMF determines, based on the user group authentication information and the user group identifier, that the terminal device belongs to the user group.

Case 2: The communications device is a first terminal, and the communications network element is a UPF network element.

Case 2 may correspond to the system architecture shown in FIG. 1, or may correspond to the system architecture shown in FIG. 3. In other words, the LMF is connected to a user plane network element of the core network.

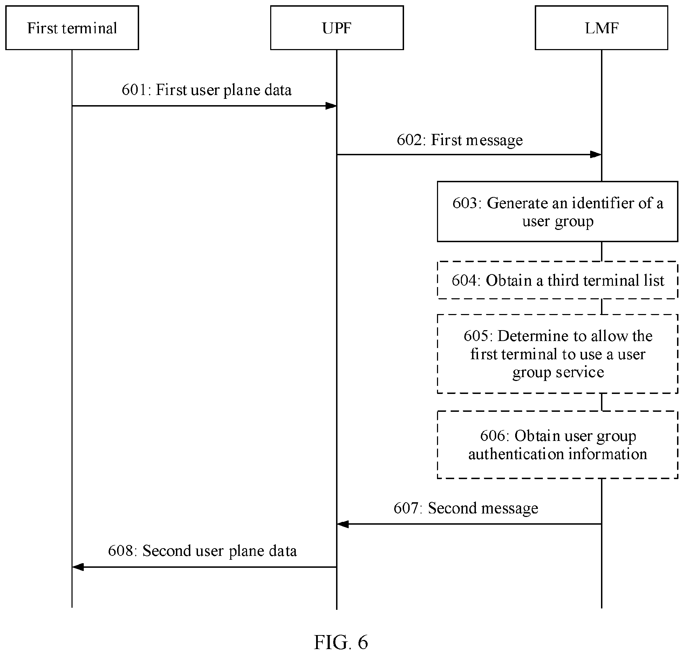

FIG. 6 is a flowchart of a user group establishment method according to this application. The method includes the following steps.

Step 601: A first terminal sends first user plane data to a UPF, and the UPF receives the first user plane data from the first terminal.

The first user plane data includes the first message in step 401. The first message includes an identifier of the first terminal and a request type.

It should be noted that a relationship between the first user plane data and the first message is: The first user plane data is data transmitted by a user plane bearer, for example, an internet protocol (Internet Protocol, IP) data packet between networks, and the first message may be used as a payload of the data of the user plane bearer, for example, may be an application layer payload in the IP data packet.

That is, step 601 is a specific implementation of step 401.

Further, the first message further includes a second terminal list, where the second terminal list includes one or more identifiers of one or more second terminals, and a terminal identifier in the second terminal list is an identifier of a terminal needing to join the user group.

Step 602: The UPF sends the first message to an LMF, and the LMF receives the first message from the UPF.

Step 603 to step 606 are the same as step 504 to step 507. Refer to the foregoing descriptions.

It should be noted that there is no strict execution sequence among step 603, step 604, step 605, and step 606, and an actual execution sequence among the steps may be adjusted based on an actual requirement.

Step 607: The LMF sends a second message to the UPF, and the UPF receives the second message from the LMF.

The second message includes the identifier of the user group. Optionally, the second message further includes the third terminal list. Optionally, the second message further includes the user group authentication information.

When receiving the second message, the UPF obtains the identifier of the user group from the second message. If the UPF may further obtain the third terminal list from the second message, the UPF further indicates an AMF to page a terminal corresponding to a terminal identifier in the third terminal list, and indicates the AMF to send the identifier of the user group to the paged terminal; or send the identifier of the user group and the user group authentication information to the paged terminal.

Step 608: The UPF sends second user plane data to the first terminal, and the first terminal receives the second user plane data from the UPF.

Step 608 is a specific implementation of step 405.

The second user plane data includes the identifier of the user group. Optionally, the second user plane data further includes the third terminal list. Optionally, the second NAS message further includes the user group authentication information.

In a specific implementation, the second user plane data includes the second message. The second message includes the identifier of the user group. Optionally, the second message further includes the third terminal list. Optionally, the second message further includes the user group authentication information.

According to step 601 to step 608, the first terminal requests, by using the UPF, the LMF to establish the user group. After generating the identifier of the user group, the LMF sends the generated identifier of the user group to the first terminal by using the UPF. Further, the LMF may further generate the user group authentication information, and send the user group authentication information to the first terminal by using the UPF. Further, the first terminal may further send the second terminal list to the LMF by using the UPF. In this case, the LMF may further obtain, based on the second terminal list, the third terminal list including an identifier of a terminal allowed to join the user group, and send the third terminal list to the first terminal by using the UPF. The UPF may further indicate the AMF to page the terminal corresponding to the terminal identifier in the third terminal list, and send the identifier of the user group and the user group authentication information to the paged terminal. In this way, a parameter required for requesting to join the user group is sent to the terminal allowed to join the user group, so that the terminal subsequently requests to join the user group. That is, the user group is established in a 3GPP network.

Case 3: The communications device is an AF device, and the communications network element is an NEF network element.

Case 3 may correspond to the system architecture shown in FIG. 1, or may correspond to the system architecture shown in FIG. 2. In other words, the LMF is connected to a control plane network element of the core network.

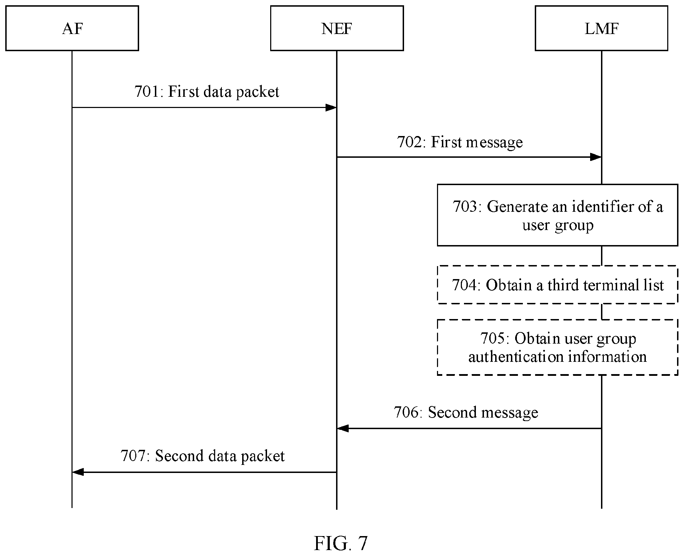

FIG. 7 is a flowchart of a user group establishment method according to this application. The method includes the following steps.

Step 701: An AF device sends a first data packet to an NEF, and the NEF receives the first data packet from the AF device.

The first data packet includes the first message in step 401. The first message includes an identifier of the AF device and a request type.

That is, step 701 is a specific implementation of step 401.

The AF device may manage one or more terminals. When the one or more terminals of the AF device need to request to join a user group, the AF device may request an LMF to establish the user group.

Therefore, the first message further includes a second terminal list, where the second terminal list includes one or more identifiers of one or more second terminals, and a terminal identifier in the second terminal list is an identifier of a terminal needing to join the user group.

Step 702: The NEF sends the first message to the LMF, and the LMF receives the first message from the NEF.

Step 703 and step 704 are the same as step 504 and step 505. Refer to the foregoing descriptions.

Step 705 is the same as step 507. Refer to the foregoing descriptions.

It should be noted that there is no strict execution sequence among step 703, step 704, and step 705, and an actual execution sequence among the steps may be adjusted based on an actual requirement.

Step 706: The LMF sends a second message to the NEF, and the NEF receives the second message from the LMF.

The second message includes the identifier of the user group. Optionally, the second message further includes the third terminal list. Optionally, the second message further includes the user group authentication information.

Step 707: The NEF sends a second data packet to the AF device, and the AF device receives the second data packet from the NEF.

Step 707 is a specific implementation of step 405.

The second data packet includes the identifier of the user group. Optionally, the second data packet further includes the third terminal list. Optionally, the second data packet further includes the user group authentication information.

In a specific implementation, the second data packet includes the second message. The second message includes the identifier of the user group. Optionally, the second message further includes the third terminal list. Optionally, the second message further includes the user group authentication information.

After step 707, the method further includes the following step:

The AF device sends the user group identifier to the terminal corresponding to the terminal identifier in the third terminal list. Optionally, the AF device further sends the user group authentication information to the terminal corresponding to the terminal identifier in the third terminal list.

According to step 701 to step 707, the AF device requests, by using the NEF, the LMF to establish the user group. After generating the identifier of the user group, the LMF sends the generated identifier of the user group to the AF device by using the NEF. Further, the LMF may further obtain the user group authentication information, and send the user group authentication information to the AF device by using the NEF. Further, the AF device may further send the second terminal list to the LMF by using the NEF. In this case, the LMF may further obtain, based on the second terminal list, the third terminal list including an identifier of a terminal allowed to join the user group, and send the third terminal list to the AF device by using the NEF. In addition, the AF device may further send the identifier of the user group and the user group authentication information to the terminal corresponding to the terminal identifier in the third terminal list. In this way, a parameter required for requesting to join the user group is sent to the terminal allowed to join the user group, so that the terminal subsequently requests to join the user group. That is, the user group is established in a 3GPP network.

It should be noted that the first message, the second message, the first NAS message, the second NAS message, the first user plane data, the second user plane data, the first data packet, the second data packet, and the like in the foregoing embodiments are merely names, and the names do not constitute a limitation on the messages. In a 5G network and another future network, the names may alternatively be replaced with other names. This is not specifically limited in the embodiments of this application.

The solutions provided in this application are described above mainly from a perspective of interaction between network elements. It may be understood that, the network elements include corresponding hardware structures and/or software modules for performing the foregoing functions. A person skilled in the art should easily be aware that, in combination with the units and algorithm steps in the examples described in the embodiments disclosed in this specification, the present invention may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

The procedures of the user group establishment methods shown in FIG. 5 to FIG. 7 are described in detail below with reference to specific embodiments.

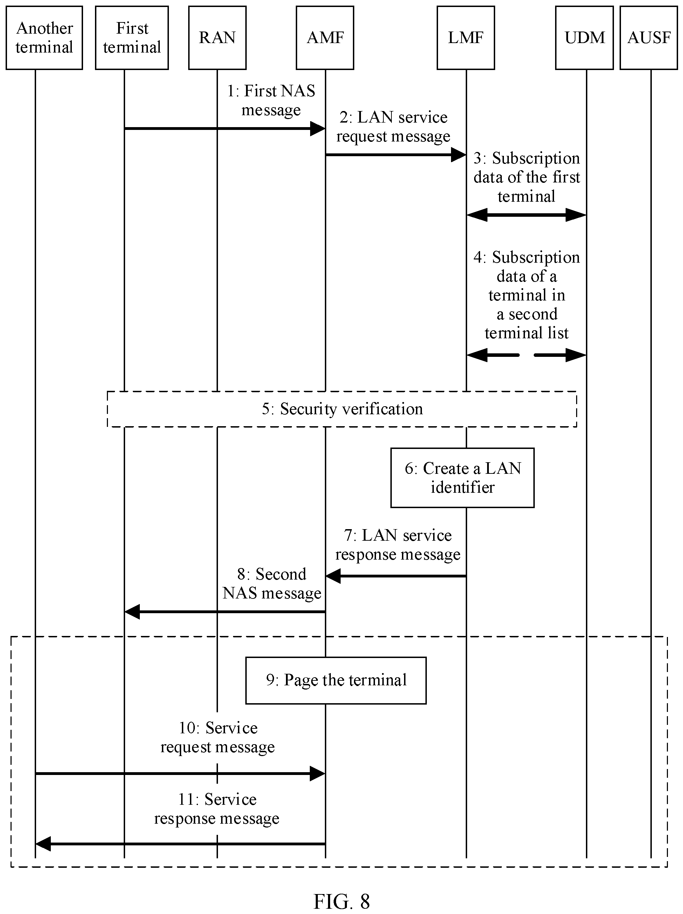

FIG. 8 shows a specific embodiment of a user group establishment method according to this application. The embodiment shown in FIG. 8 is a specific implementation of the user group establishment method shown in FIG. 5.

The embodiment shown in FIG. 8 includes the following steps.

Step 1: A first terminal sends a first NAS message to an AMF, and the AMF receives the first NAS message from the terminal.

The first NAS message includes an AMF message and a LAN service request message. The LAN service request message is a specific implementation of the first message in the embodiment shown in FIG. 5. The AMF message is a specific implementation of the indication information included in the first NAS message in the embodiment shown in FIG. 5.

The AMF may select an LMF based on the received AMF message. For example, the AMF message may include identification information of an LMF, and the identification information is used to indicate the AMF to select the LMF. For another example, the AMF message may include information indicating that a LAN service is requested, and the information indicates that the LAN service needs to be provided for the terminal. For another example, the AMF message is empty, and the AMF message may be used to indicate that a LAN service is requested.

That a LAN service is requested is that a user group is requested to be established.

The AMF selects an LMF based on the AMF message. For example, the AMF determines a network function NF type based on the AMF message. The NF type may be an LMF type. The AMF sends a network function query request to an NRF. The network function query request includes the NF type. The NF type is the LMF type. The NRF determines that an LMF network element can provide the LAN service, and sends an access address (such as an IP address or an identifier) of the LMF to the AMF.

Step 2: The AMF sends the LAN service request message to the LMF, and the LMF receives the LAN service request message from the AMF.

The AMF sends the LAN service request message to the selected LMF. The LAN service request message includes an identifier of the first terminal and a request type.

Optionally, the LAN service request message further includes a second terminal list, and the second terminal list includes identifiers of a plurality of terminals. The LAN service request message is used to request to establish a user group that includes the terminals corresponding to the terminal identifiers in the second terminal list, and the terminals in the user group may communicate with each other.

Step 3: The LMF obtains subscription data of the first terminal from a UDM.

The subscription data includes LAN service indication information of the first terminal. The indication information indicates whether the first terminal is allowed to use the LAN service. The LMF determines, based on the subscription data of the terminal, whether the first terminal is allowed to use the LAN service.

Step 4: The LMF further obtains subscription data of a terminal in the second terminal list from the UDM.

Step 4 is an optional step. When the LAN service request message includes the second terminal list, step 4 is performed.

It should be noted that, in an implementation, step 3 and step 4 may alternatively be combined into one step.

The LMF determines, based on the obtained subscription data of the terminal corresponding to the terminal identifier in the second terminal list, an identifier of a terminal that is allowed to use the LAN service and that is in the second terminal list.

Step 5: The LMF performs security verification on an identity of the terminal, and determines that the terminal is an authorized user.

Step 5 is an optional step.

A security verification process includes interaction with an authentication server function (Authentication Server Function, AUSF) network element. For a specific security verification process, refer to a verification solution related to the prior art. Details are not described herein.

Step 6: The LMF creates a LAN identifier.

The LAN identifier may be a virtual data network (data network, DN) name dynamically created by the LMF. Optionally, the LMF further determines LAN authentication information. The LAN authentication information is provided to the LMF when the terminal is accessed, and the LMF determines, based on the LAN authentication information, that the terminal is an authorized LAN member.

In this step, the LAN identifier created by the LMF is a specific implementation of the identifier of the user group in the embodiment shown in FIG. 5.

Step 7: The LMF sends a LAN service response message to the AMF, and the AMF receives the LAN service response message from the LMF.

The LAN service response message includes the LAN identifier. Optionally, the LAN service response message further includes the LAN authentication information and a third terminal list.

Step 8: The AMF sends a second NAS message to the terminal, and the terminal receives the second NAS message from the AMF

The second NAS message includes the LAN service response message.

The LAN identifier is created by performing step 1 to step 8. The LAN identifier is used to identify a user group. When the terminal wants to join the user group, the terminal may send a request message to the LMF.

Optionally, the LAN service response message in step 7 may further include paging indication information, and the paging indication information is used to indicate the AMF to page a terminal in the third terminal list. In this case, step 9 to step 11 may be further included.

Step 9: The AMF pages a terminal corresponding to a terminal identifier in the third terminal list.

Step 10: The terminal corresponding to the terminal identifier in the third terminal list sends a service request message to the AMF, to establish a connection to the AMF

Step 11: The AMF sends a service response message to the terminal corresponding to the terminal identifier in the third terminal list.

The service response message includes the LAN identifier, and optionally further includes the LAN authentication information.

By performing the steps, a parameter required for requesting to join the user group is sent to the terminal allowed to join the user group, so that the terminal subsequently requests to join the user group. That is, the user group is established in a 3GPP network.

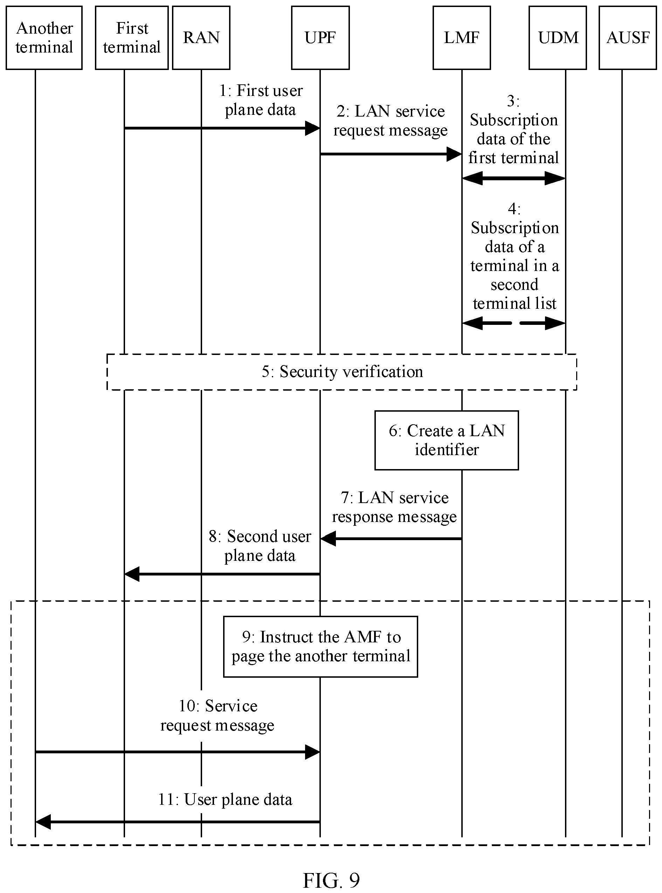

FIG. 9 shows a specific embodiment of a user group establishment method according to this application. The embodiment shown in FIG. 9 is a specific implementation of the user group establishment method shown in FIG. 6.

The embodiment shown in FIG. 9 includes the following steps.

Step 1: A first terminal sends first user plane data to a UPF, and the UPF receives the first user plane data from the first terminal.

The first user plane data includes a LAN service request message. For content included in the request message of the LAN service, refer to the embodiment shown in FIG. 8.

Step 2: The UPF sends the LAN service request message to an LMF, and the LMF receives the LAN service request message from the UPF.

For information specifically carried in the request message of the LAN service, refer to related descriptions of step 2 in the embodiment shown in FIG. 8. Details are not described herein again.

Step 3 to step 7 are the same as step 3 to step 7 in the embodiment shown in FIG. 8. Refer to the foregoing descriptions.

Step 8: The UPF sends second user plane data to the first terminal, and the first terminal receives the second user plane data from the UPF.

The second user plane data includes the LAN service response message.

The LAN identifier is created by performing step 1 to step 8. The LAN identifier is used to identify a user group. When the terminal wants to join the user group, the terminal may send a request message to the LMF.

Optionally, if the step 7 further includes paging indication information, step 9 to step 11 may be further included.

Step 9: The UPF indicates the AMF to page a terminal corresponding to a terminal identifier in the third terminal list.

Step 10: The terminal in the third terminal list sends a service request message to the UPF, to establish a connection to the UPF.

Step 11: The UPF sends user plane data to the terminal corresponding to the terminal identifier in the third terminal list.

The user plane data includes the LAN identifier, and optionally further includes the LAN authentication information.

By performing the steps, a parameter required for requesting to join the user group is sent to the terminal allowed to join the user group, so that the terminal subsequently requests to join the user group. That is, the user group is established in a 3GPP network.

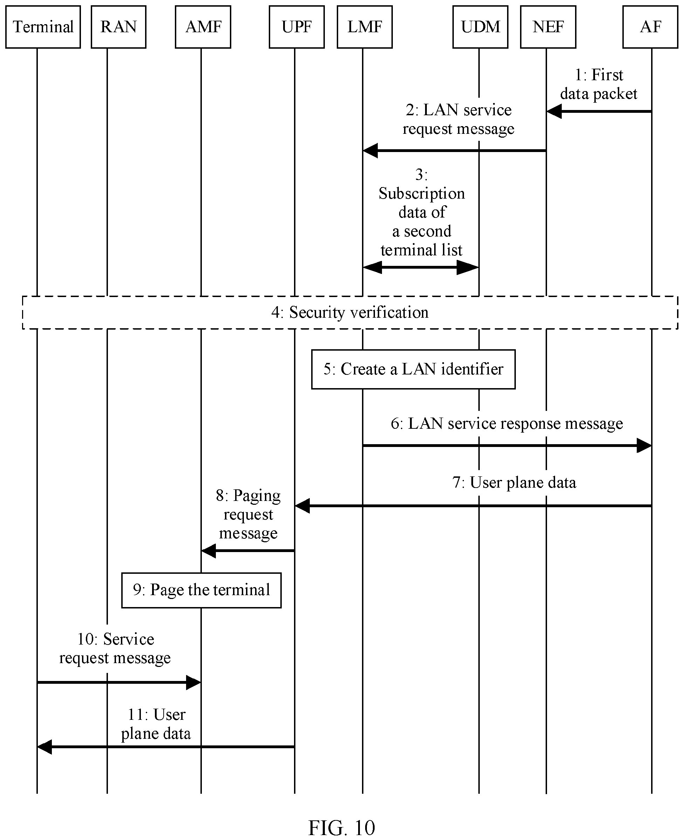

FIG. 10 shows a specific embodiment of a user group establishment method according to this application. The embodiment shown in FIG. 10 is a specific implementation of the user group establishment method shown in FIG. 7.

The embodiment shown in FIG. 10 includes the following steps.

Step 1: An AF device sends a first data packet to an NEF, and the NEF receives the first data packet from the AF device.

The AF device refers to a server outside the 3GPP network, for example, a server in an enterprise network or industrial control.

The first data packet includes a LAN service request message. The LAN service request message includes an identifier of the AF, a service type, and a second terminal list. The second terminal list includes one or more identifiers of one or more terminals. The service type is a user group service, and indicates that a LAN is requested to be established.

Step 2: The NEF sends the LAN service request message to an LMF, and the LMF receives the LAN service request message from the NEF.

Step 3: The LMF obtains, from the UDM, subscription data of a terminal corresponding to a terminal identifier in the second terminal list.

The subscription data includes LAN service indication information of the terminal, where the indication information indicates whether the terminal is allowed to use a LAN service, so that the LMF can determine a third terminal list. A terminal in the third terminal list is a terminal allowed to use the LAN service.

Step 4: The LMF performs security verification on an identity of the terminal, and determines that the terminal is an authorized user.

Step 4 is an optional step.

Step 5: The LMF creates a LAN identifier.

The LAN identifier may be a virtual DN name dynamically created by the LMF. Optionally, the LMF further determines LAN authentication information. The LAN authentication information is provided to the LMF when the terminal is accessed, and the LMF determines, based on the LAN authentication information, that the terminal is an authorized LAN member.

Step 6: The LMF sends a LAN service response message to the AF, and the AF receives the LAN service response message from the LMF

During specific implementation, step 6 may be that the LMF may send the LAN service response message to the NEF, and then the NEF sends a second data packet to the AF device. The second data packet includes the LAN service response message.

The service response message includes the LAN identifier, and optionally further includes the LAN authentication information and the third terminal list.

After the AF receives the LAN service response message, if a terminal corresponding to a terminal identifier in the third terminal list is in a connected state, the AF sends user plane data to the terminal in the third terminal list by using the UPF. The user plane data includes the LAN identifier, and optionally further includes the LAN authentication information. If a terminal corresponding to a terminal identifier in the third terminal list is in an idle state, the AF needs to page the terminal by using the AMF, to establish a user plane connection, and then send user plane data by using the UPF. Details are described below.

Step 7: The AF sends user plane data to a UPF to which the terminal in the third terminal list belongs, and the UPF receives the user plane data from the AF.

The user plane data includes the LAN identifier, and optionally further includes the LAN authentication information.

Step 8: If the UPF determines that the terminal is in an idle state, the UPF sends a paging request message to the AMF, and the AMF receives the paging request message from the UPF.

Step 9: The AMF pages the terminal in the idle state.

The terminal herein means the terminal in the idle state in the third terminal list.

Step 10: The terminal in the idle state in the third terminal list sends a service request message to the AMF, to establish a connection to the UPF.

Certainly, if the terminal corresponding to the terminal identifier in the third terminal list is in the connected state, step 8 to step 10 are not performed.

Step 11: The UPF sends the user plane data to the terminal in the third terminal list.

The user plane data includes the LAN identifier, and optionally further includes the LAN authentication information.

By performing the steps, a parameter required for requesting to join the user group is sent to the terminal allowed to join the user group, so that the terminal subsequently requests to join the user group. That is, the user group is established in a 3GPP network.

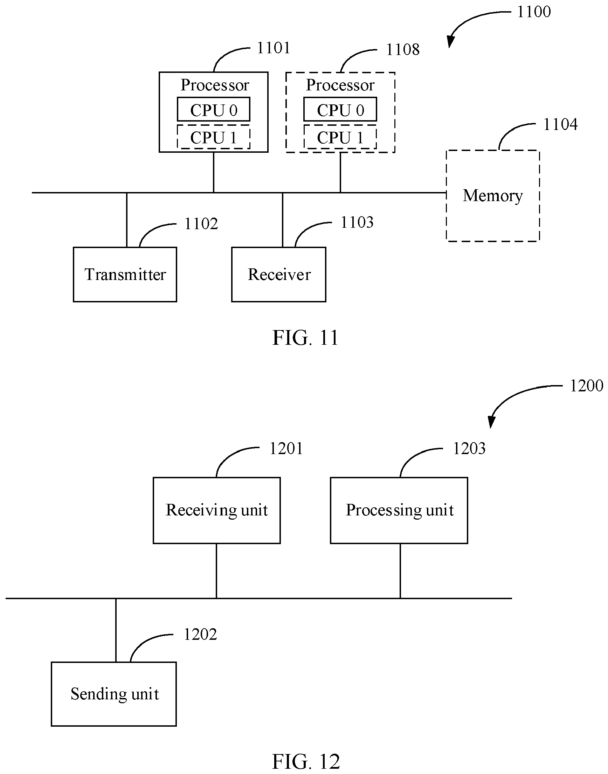

Based on a same inventive concept, FIG. 11 is a schematic diagram of an apparatus 1100 according to this application. The apparatus may be a communications device, a communications network element, a user group management function network element, a chip of a communications device, a chip of a communications network element, or a chip of a user group management function network element, and may perform the method performed by the communications device, the communications network element, or the user group management function network element in any one of the foregoing embodiments.

The apparatus 1100 includes at least one processor 1101, a transmitter 1102, and a receiver 1103. Optionally, the apparatus 1100 further includes a memory 1104. The processor 1101, the transmitter 1102, the receiver 1103, and the memory 1104 are connected by using a communications line.

The processor 1101 may be a general purpose central processing unit (CPU), a microprocessor, an application-specific integrated circuit (application-specific integrated circuit, ASIC), or one or more integrated circuits configured to control execution of a program of the solution of the present invention.

The communications line may include a path for transmitting information between the foregoing units.

The transmitter 1102 and the receiver 1103 are configured to communicate with another device or a communications network. The transmitter and the receiver each include a radio frequency circuit.

The memory 1104 may be a read-only memory (read-only memory, ROM) or another type of static storage device that can store static information and an instruction, a random access memory (random access memory, RAM) or another type of dynamic storage device that can store information and an instruction, or may be an electrically erasable programmable read-only memory (Electrically erasable programmabler-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, this is not limited thereto. The memory 1104 may exist independently, and be connected to the processor 1101 by using the communications line. The memory 1104 may alternatively be integrated with the processor. The memory 1104 is configured to store application program code used for executing the solution of the present invention, and the processor 1101 controls the execution. The processor 1101 is configured to execute the program code in the memory 1104.

During specific implementation, in an embodiment, the processor 1101 may include one or more CPUs, such as a CPU 0 and a CPU 1 in FIG. 11.

During specific implementation, in an embodiment, the apparatus 1100 may include a plurality of processors, for example, the processor 1101 and a processor 1108 in FIG. 11. Each of the processors may be a single-core (single-CPU) processor, or may be a multi-core (multi-CPU) processor. Herein, the processor may be one or more devices, circuits, and/or processing cores for processing data (for example, a computer program instruction).

It should be understood that when the apparatus 1100 is a communications device, the apparatus 1100 may be configured to implement steps performed by the communications device in the methods in the embodiments of the present invention. For related features, refer to the foregoing descriptions. Details are not described herein again.

It should be understood that when the apparatus 1100 is a communications network element, the apparatus 1100 may be configured to implement steps performed by the communications network element in the methods in the embodiments of the present invention. For related features, refer to the foregoing descriptions. Details are not described herein again.

It should be understood that when the apparatus 1100 is a user group management network element, the apparatus 1100 may be configured to implement steps performed by the user group management network element in the methods in the embodiments of the present invention. For related features, refer to the foregoing descriptions. Details are not described herein again.

During specific implementation, the actions of the communications devices (including the first terminal or the AF device) in FIG. 4 to FIG. 10 may be performed by the processor 1101 (and/or the processor 1108) in the apparatus 1100 by invoking the application program code stored in the memory 1104. This is not limited in the embodiments of this application.

During specific implementation, the actions of the communications network elements (including the user plane function, the access and mobility management function, or the network exposure function) in FIG. 4 to FIG. 10 may be performed by the processor 1101 (and/or the processor 1108) in the apparatus 1100 by invoking the application program code stored in the memory 1104. This is not limited in the embodiments of this application.

During specific implementation, the actions of the user group management function network elements in FIG. 4 to FIG. 10 may be performed by the processor 1101 (and/or the processor 1108) in the apparatus 1100 by invoking the application program code stored in the memory 1104. This is not limited in the embodiments of this application.

When the apparatus shown in FIG. 11 is a chip, for example, may be a chip of a communications device, a chip of a communications network element, or a chip of a user group management function network element, the chip includes the processor 1101 (may further include the processor 1108), the transmitter 1102, and the receiver 1103, and optionally further includes the memory 1104. Specifically, the transmitter 1102 may be an output interface, a pin, a circuit, or the like, and the receiver 1103 may be an input interface, a pin, a circuit, or the like. The memory 1104 may be a register, a cache, or the like. The processor 1101 and the processor 1108 each may be a general purpose CPU, a microprocessor, an ASIC, or one or more integrated circuits configured to control program execution of the user group establishment method according to any one of the foregoing embodiments.

In this application, function modules in the user group management function network element may be obtained through division based on the foregoing method examples. For example, the function modules may be obtained through division based on corresponding functions, or two or more functions may be integrated into one processing module. The integrated module may be implemented in a form of hardware, or may be implemented in a form of a software function module. It should be noted that, in this application, division into the modules is an example, is merely a logical function division, and may be other division in an actual implementation. For example, when the function modules are obtained through division based on the corresponding functions, FIG. 12 is a schematic diagram of an apparatus 1200. The apparatus 1200 may be the user group management function network element in the foregoing embodiments, and the apparatus 1200 includes a receiving unit 1201, a sending unit 1202, and a processing unit 1203.

The receiving unit 1201 is configured to receive a first message from a communications device, where the first message includes a request type and an identifier of the communications device, and the request type is used to request to establish a user group.

The processing unit 1203 is configured to generate an identifier of the user group.

The sending unit 1202 is configured to send the identifier of the user group to the communications device.

In an implementation, the communications device is a first terminal or an application function device.

In an implementation, the first message further includes a second terminal list, the second terminal list includes an identifier of at least one second terminal, and the identifier of the at least one second terminal is an identifier of a terminal needing to join the user group.

The processing unit 1203 is further configured to: obtain subscription data corresponding to the identifier of the second terminal from a unified data management network element, and determine, based on the subscription data corresponding to the identifier of the second terminal, a third terminal list allowed to join the user group.

The sending unit 1202 is further configured to send the third terminal list to the communications device.

In an implementation, when the communications device is a first terminal, the processing unit 1203 is further configured to: obtain, based on an identifier of the first terminal, subscription data corresponding to the identifier of the first terminal from the unified data management network element; and determine, based on the subscription data corresponding to the identifier of the first terminal, to allow the first terminal to use a user group service.

In an implementation, the processing unit 1203 is further configured to obtain user group authentication information, where the user group authentication information is used to verify authorization of the terminal needing to join the user group.

The sending unit 1202 is further configured to send the user group authentication information to the communications device.

In an implementation, that the sending unit 1202 is configured to send the identifier of the user group to the communications device specifically includes: sending a second message to an access and mobility management function network element, where the second message includes the third terminal list and the identifier of the user group, and the second message is used to indicate the access and mobility management function network element to page a terminal corresponding to a terminal identifier in the third terminal list, and sending the identifier of the user group to the terminal.

It should be understood that the apparatus may be configured to implement the steps performed by the user group management function network element in the methods in the embodiments of the present invention. For related features, refer to the foregoing descriptions. Details are not described herein again.

Specifically, functions/implementation processes of the receiving unit 1201, the processing unit 1203, and the sending unit 1202 in FIG. 12 may be implemented by the processor 1101 in FIG. 11 by invoking a computer execution instruction stored in the memory 1104. Alternatively, a function/an implementation process of the processing unit 1203 in FIG. 12 may be implemented by the processor 1101 in FIG. 11 by invoking a computer execution instruction stored in the memory 1104, and functions/implementation processes of the receiving unit 1201 and the sending unit 1202 in FIG. 12 may be implemented by the receiver 1103 and the transmitter 1102 in FIG. 11.

Optionally, when the apparatus 1200 is a chip, the functions/implementation processes of the receiving unit 1201 and the sending unit 1202 may alternatively be implemented by a pin, a circuit, or the like. Optionally, when the apparatus 1200 is a chip, the memory 1104 may be a storage unit in the chip, for example, a register or a cache. Certainly, when the apparatus 1200 is a user group management function network element, the memory 1104 may be a storage unit that is located outside a chip and that is in the user group management function network element. This is not specifically limited in the embodiments of this application.

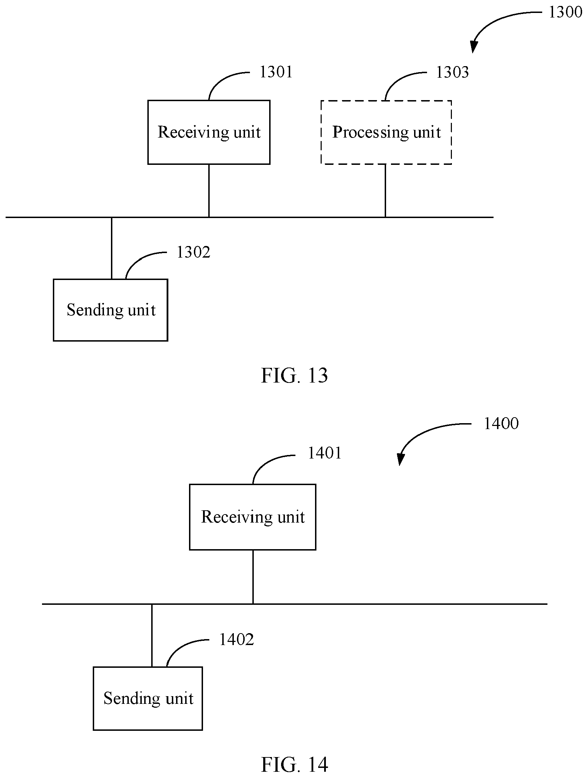

In this application, function modules in a communications network element may be obtained through division based on the foregoing method examples. For example, the function modules may be obtained through division based on corresponding functions, or two or more functions may be integrated into one processing module. The integrated module may be implemented in a form of hardware, or may be implemented in a form of a software function module. It should be noted that, in this application, division into the modules is an example, is merely a logical function division, and may be other division in an actual implementation. For example, when the function modules are obtained through division based on the corresponding functions, FIG. 13 is a schematic diagram of an apparatus 1300. The apparatus 1300 may be the communications network element in the foregoing embodiments, and the apparatus 1300 includes a receiving unit 1301 and a sending unit 1302, and optionally further includes a processing unit 1303.

The receiving unit 1301 is configured to receive a first message from a communications device, where the first message includes a request type and an identifier of the communications device, and the request type is used to request to establish a user group.

The sending unit 1302 is configured to send the first message to a user group management function network element.

The receiving unit 1301 is further configured to receive an identifier that is of the user group and that is generated by the user group management function network element.

The sending unit 1302 is further configured to send the identifier of the user group to the communications device.

In an implementation, the communications network element is an access and mobility management function network element, and the communications device is a first terminal.

That the receiving unit 1301 is configured to receive a first message from a communications device specifically includes: receiving a first non-access stratum NAS message from the first terminal, where the first NAS message includes the first message.

That the sending unit 1302 is configured to send the identifier of the user group to the communications device specifically includes: sending a second NAS message to the first terminal, where the second NAS message includes the identifier of the user group.

In an implementation, the first NAS message further includes indication information, and the indication information is used to indicate a user group service. The apparatus further includes the processing unit 1303.

The processing unit 1303 is configured to determine a network function NF type based on the indication information.

The sending unit 1302 is further configured to send a query message to an NRF network element, where the query message includes the NF type.

The receiving unit 1301 is further configured to receive an access identifier of the user group management function network element from the NRF network element.

In an implementation, the communications network element is a user plane function network element, and the communications device is a first terminal.

That the receiving unit is 1301 configured to receive a first message from a communications device specifically includes: receiving first user plane data from the first terminal, where the first user plane data includes the first message.

That the sending unit 1302 is configured to send the identifier of the user group to the communications device specifically includes: sending second user plane data to the first terminal, where the second user plane data includes the identifier of the user group.

In an implementation, the communications network element is a network exposure function network element, and the communications device is an application function device.

That the receiving unit 1301 is configured to receive a first message from a communications device specifically includes: receiving a first data packet from the application function device, where the first data packet includes the first message.

That the sending unit 1302 is configured to send the identifier of the user group to the communications device specifically includes: sending a second data packet to the first terminal, where the second data packet includes the identifier of the user group.

In an implementation, the first message further includes a second terminal list, the second terminal list includes an identifier of at least one second terminal, and the identifier of the at least one second terminal is an identifier of a terminal needing to join the user group; and the sending unit 1302 is further configured to send a third terminal list to the terminal, where the third terminal list includes an identifier of a terminal that is in the second terminal and that is allowed to join the user group.

In an implementation, the communications network element is an access and mobility management function network element, and the apparatus further includes the processing unit 1303.

The processing unit 1303 is configured to: obtain a third terminal list and the identifier of the user group that are from the user group management function network element, where the third terminal list includes an identifier of a terminal allowed to join the user group; and page the terminal corresponding to the terminal identifier in the third terminal list, and establish a connection to the terminal.

The sending unit 1302 is further configured to send the identifier of the user group to the terminal.

It should be understood that the apparatus may be configured to implement the steps performed by the communications network element in the methods in the embodiments of the present invention. For related features, refer to the foregoing descriptions. Details are not described herein again.

Specifically, functions/implementation processes of the receiving unit 1301, the processing unit 1303, and the sending unit 1302 in FIG. 13 may be implemented by the processor 1101 in FIG. 11 by invoking a computer execution instruction stored in the memory 1104. Alternatively, a function/an implementation process of the processing unit 1303 in FIG. 13 may be implemented by the processor 1101 in FIG. 11 by invoking a computer execution instruction stored in the memory 1104, and functions/implementation processes of the receiving unit 1301 and the sending unit 1302 in FIG. 13 may be implemented by the receiver 1103 and the transmitter 1102 in FIG. 11.

Optionally, when the apparatus 1300 is a chip, the functions/implementation processes of the receiving unit 1301 and the sending unit 1302 may alternatively be implemented by a pin, a circuit, or the like. Optionally, when the apparatus 1300 is a chip, the memory 1104 may be a storage unit in the chip, for example, a register or a cache. Certainly, when the apparatus 1300 is a communications network element, the memory 1104 may be a storage unit that is located outside a chip and that is in the communications network element. This is not specifically limited in the embodiments of this application.

In this application, function modules in a communications device may be obtained through division based on the foregoing method examples. For example, the function modules may be obtained through division based on corresponding functions, or two or more functions may be integrated into one processing module. The integrated module may be implemented in a form of hardware, or may be implemented in a form of a software function module. It should be noted that, in this application, division into the modules is an example, is merely a logical function division, and may be other division in an actual implementation. For example, when the function modules are obtained through division based on the corresponding functions, FIG. 14 is a schematic diagram of an apparatus 1400. The apparatus 1400 may be the communications device in the foregoing embodiments, and the apparatus 1400 includes a receiving unit 1401 and a sending unit 1402.

The sending unit 1402 is configured to send a first message to a user group management function network element, where the first message includes a request type and an identifier of the communications device, and the request type is used to request to establish a user group.

The receiving unit 1401 is configured to receive an identifier that is of the user group and that is generated by the user group management function network element.

In an implementation, the first message further includes a second terminal list, the second terminal list includes an identifier of at least one second terminal, and the identifier of the at least one second terminal is an identifier of a terminal needing to join the user group.

The receiving unit 1401 is further configured to receive a third terminal list from the user group management function network element, where the third terminal list includes an identifier of a terminal that is in the second terminal and that is allowed to join the user group.

In an implementation, the communications device is an application function device.

The sending unit 1402 is further configured to send the identifier of the user group to the terminal corresponding to the terminal identifier in the third terminal list.

In an implementation, the receiving unit 1401 is further configured to receive user group authentication information from the user group management function network element, where the user group authentication information is used to verify authorization of the terminal needing to join the user group.

In an implementation, the communications device is a first terminal or an application function device.

It should be understood that the apparatus may be configured to implement the steps performed by the communications device in the methods in the embodiments of the present invention. For related features, refer to the foregoing descriptions. Details are not described herein again.

Specifically, functions/implementation processes of the receiving unit 1401 and the sending unit 1402 in FIG. 14 may be implemented by the processor 1101 in FIG. 11 by invoking a computer execution instruction stored in the memory 1104. Alternatively, functions/implementation processes of the receiving unit 1401 and the sending unit 1402 in FIG. 14 may be implemented by the receiver 1103 and the transmitter 1102 in FIG. 11.

Optionally, when the apparatus 1400 is a chip, the functions/implementation processes of the receiving unit 1401 and the sending unit 1402 may alternatively be implemented by a pin, a circuit, or the like. Optionally, when the apparatus 1400 is a chip, the memory 1104 may be a storage unit in the chip, for example, a register or a cache. Certainly, when the apparatus 1400 is a communications device, the memory 1104 may be a storage unit that is located outside a chip and that is in the communications device. This is not specifically limited in the embodiments of this application.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer program instructions. When the computer program instruction is loaded and executed on a computer, the procedure or functions according to the embodiments of the present invention are all or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

Although the present invention is described with reference to the embodiments, in a process of implementing the present invention that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a plurality. A single processor or another unit may implement several functions enumerated in the claims. Some measures are recorded in dependent claims that are different from each other, but this does not mean that these measures cannot be combined to produce a better effect.

A person skilled in the art should understand that the embodiments of this application may be provided as a method, an apparatus (device), a computer-readable storage medium, or a computer program product. Therefore, this application may use a form of hardware only embodiments, software only embodiments, or embodiments with a combination of software and hardware. They are collectively referred to as "modules" or "systems".

A person skilled in the art may further understand that various illustrative logical blocks (illustrative logic block) and steps (step) that are listed in the embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of the embodiments of this application.

Although the present invention is described with reference to specific features and the embodiments thereof, it is clear that various modifications and combinations may be made to them without departing from the spirit and scope of the present invention. Correspondingly, the specification and accompanying drawings are merely examples of the present invention defined by the accompanying claims, and are considered as any of or all modifications, variations, combinations or equivalents that cover the scope of the present invention. It is clear that a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A user group establishment method, comprising:
receiving, by a user group management function network element, a first message from a communications device, wherein the first message comprises a request type and an identifier of the communications device, and the request type is used to request to establish a user group; and
generating, by the user group management function network element, an identifier of the user group, and sending the identifier of the user group to the communications device.

2. The method according to claim 1, wherein the communications device is a first terminal or an application function device.

3. The method according to claim 1 or 2, wherein the first message further comprises a second terminal list, the second terminal list comprises an identifier of at least one second terminal, and the identifier of the at least one second terminal is an identifier of a terminal requesting to join the user group; and the method further comprises:
obtaining, by the user group management function network element, subscription data corresponding to the identifier of the second terminal from a unified data management network element;
determining, by the user group management function network element based on the subscription data corresponding to the identifier of the second terminal, a third terminal list of a terminal allowed to join the user group; and
sending, by the user group management function network element, the third terminal list to the communications device.

4. The method according to any one of claims 1 to 3, wherein when the communications device is a first terminal, the method further comprises:
obtaining, by the user group management function network element based on an identifier of the first terminal, subscription data corresponding to the identifier of the first terminal from the unified data management network element; and
determining, by the user group management function network element based on the subscription data corresponding to the identifier of the first terminal, to allow the first terminal to use a user group service.

5. The method according to claim 3, wherein the sending, by the user group management function network element, the identifier of the user group to the communications device comprises:
sending, by the user group management function network element, a second message to an access and mobility management function network element, wherein the second message comprises the third terminal list and the identifier of the user group, and the second message is used to indicate the access and mobility management function network element to page a terminal corresponding to a terminal identifier in the third terminal list, and send the identifier of the user group to the terminal.

6. The method according to any one of claims 1 to 5, wherein the method further comprises:
obtaining, by the user group management function network element, user group authentication information, wherein the user group authentication information is used to verify authorization of the terminal requesting to join the user group; and
sending, by the user group management function network element, the user group authentication information to the communications device.

7. A user group establishment method, comprising:
receiving, by a communications network element, a first message from a communications device, wherein the first message comprises a request type and an identifier of the communications device, and the request type is used to request to establish a user group;
sending, by the communications network element, the first message to a user group management function network element;
receiving, by the communications network element, an identifier that is of the user group and that is generated by the user group management function network element; and
sending, by the communications network element, the identifier of the user group to the communications device.

8. The method according to claim 7, wherein the communications network element is an access and mobility management function network element, and the communications device is a first terminal;
the receiving, by a communications network element, a first message from a communications device comprises:
receiving, by the access and mobility management function network element, a first non-access stratum NAS message from the first terminal, wherein the first NAS message comprises the first message; and
the sending, by the communications network element, the identifier of the user group to the communications device comprises:
sending, by the access and mobility management function network element, a second NAS message to the first terminal, wherein the second NAS message comprises the identifier of the user group.

9. The method according to claim 8, wherein the first NAS message further comprises indication information, and the indication information is used to indicate a user group service; and the method further comprises:
determining, by the communications network element, a network function NF type based on the indication information;
sending, by the communications network element, a query message to a network function repository function network element, wherein the query message comprises the NF type; and
receiving, by the communications network element, an access identifier of the user group management function network element from the network function repository function network element.

10. The method according to claim 7, wherein the communications network element is a user plane function network element, and the communications device is a first terminal;
the receiving, by a communications network element, a first message from a communications device comprises:
receiving, by the user plane function network element, first user plane data from the first terminal, wherein the first user plane data packet comprises the first message; and
the sending, by the communications network element, the identifier of the user group to the communications device comprises:
sending, by the user plane function network element, second user plane data to the first terminal, wherein the second user plane data packet comprises the identifier of the user group.

11. The method according to claim 7, wherein the communications network element is a network exposure function network element, and the communications device is an application function device;
the receiving, by a communications network element, a first message from a communications device comprises:
receiving, by the network exposure function network element, a first data packet from the application function device, wherein the first data packet comprises the first message; and
the sending, by the communications network element, the identifier of the user group to the communications device comprises:
sending, by the network capability exposure function network element, a second data packet to the first terminal, wherein the second data packet comprises the identifier of the user group.

12. The method according to any one of claims 7 to 11, wherein the first message further comprises a second terminal list, the second terminal list comprises an identifier of at least one second terminal, and the identifier of the at least one second terminal is an identifier of a terminal requesting to join the user group; and the method further comprises:
sending, by the communications network element, a third terminal list to the terminal, wherein the third terminal list comprises an identifier of a terminal that is in the second terminal and that is allowed to join the user group.

13. The method according to any one of claims 7 to 9, wherein the communications network element is an access and mobility management function network element, and the method further comprises:
obtaining, by the access and mobility management function network element, a third terminal list and the identifier of the user group that are from the user group management function network element, wherein the third terminal list comprises an identifier of a terminal allowed to join the user group;
paging, by the access and mobility management function network element, the terminal corresponding to the terminal identifier in the third terminal list, and establishing a connection to the terminal; and
sending, by the communications network element, the identifier of the user group to the terminal.

14. A user group establishment method, comprising:
sending, by a communications device, a first message to a user group management function network element, wherein the first message comprises a request type and an identifier of the communications device, and the request type is used to request to establish a user group; and
receiving, by the communications device, an identifier that is of the user group and that is generated by the user group management function network element.

15. The method according to claim 14, wherein the first message further comprises a second terminal list, the second terminal list comprises an identifier of at least one second terminal, and the identifier of the at least one second terminal is an identifier of a terminal requesting to join the user group; and the method further comprises:
receiving, by the communications device, a third terminal list from the user group management function network element, wherein the third terminal list comprises an identifier of a terminal that is in the second terminal and that is allowed to join the user group.

16. The method according to claim 15, wherein the communications device is an application function device, and the method further comprises:
sending, by the communications device, the identifier of the user group to the terminal corresponding to the terminal identifier in the third terminal list.

17. The method according to any one of claims 14 to 16, wherein the method further comprises:
receiving, by the communications device, user group authentication information from the user group management function network element, wherein the user group authentication information is used to verify authorization of the terminal requesting to join the user group.

18. The method according to any one of claims 14 to 17, wherein the communications device is a first terminal or an application function device.

19. An apparatus, comprising a processing unit, a receiving unit, and a sending unit, wherein
the receiving unit is configured to receive a first message from a communications device, wherein the first message comprises a request type and an identifier of the communications device, and the request type is used to request to establish a user group;
the processing unit is configured to generate an identifier of the user group; and
the sending unit is configured to send the identifier of the user group to the communications device.

20. The apparatus according to claim 19, wherein the communications device is a first terminal or an application function device.

21. The apparatus according to claim 19 or 20, wherein the first message further comprises a second terminal list, the second terminal list comprises an identifier of at least one second terminal, and the identifier of the at least one second terminal is an identifier of a terminal requesting to join the user group;
the processing unit is further configured to: obtain subscription data corresponding to the identifier of the second terminal from a unified data management network element, and determine, based on the subscription data corresponding to the identifier of the second terminal, a third terminal list allowed to join the user group; and
the sending unit is further configured to send the third terminal list to the communications device.

22. The apparatus according to any one of claims 19 to 21, wherein when the communications device is a first terminal, the processing unit is further configured to:
obtain, based on an identifier of the first terminal, subscription data corresponding to the identifier of the first terminal from the unified data management network element;
and determine, based on the subscription data corresponding to the identifier of the first terminal, to allow the first terminal to use a user group service.

23. The apparatus according to claim 21, wherein that the sending unit is configured to send the identifier of the user group to the communications device specifically comprises: sending a second message to the access and mobility management function network element, wherein the second message comprises the third terminal list and the identifier of the user group, and the second message is used to indicate the access and mobility management function network element to page a terminal corresponding to a terminal identifier in the third terminal list, and send the identifier of the user group to the terminal.

24. The apparatus according to any one of claims 19 to 23, wherein the processing unit is further configured to obtain user group authentication information, wherein the user group authentication information is used to verify authorization of the terminal requesting to join the user group; and
the sending unit is further configured to send the user group authentication information to the communications device.

25. An apparatus, comprising a receiving unit and a sending unit, wherein
the receiving unit is configured to receive a first message from a communications device, wherein the first message comprises a request type and an identifier of the communications device, and the request type is used to request to establish a user group;
the sending unit is configured to send the first message to a user group management function network element;
the receiving unit is further configured to receive an identifier that is of the user group and that is generated by the user group management function network element; and
the sending unit is further configured to send the identifier of the user group to the communications device.

26. The apparatus according to claim 25, wherein the apparatus is an access and mobility management function network element, and the communications device is a first terminal;
that the receiving unit is configured to receive a first message from a communications device specifically comprises: receiving a first non-access stratum NAS message from the first terminal, wherein the first NAS message comprises the first message; and
that the sending unit is configured to send the identifier of the user group to the communications device specifically comprises: sending a second NAS message to the first terminal, wherein the second NAS message comprises the identifier of the user group.

27. The apparatus according to claim 26, wherein the first NAS message further comprises indication information, and the indication information is used to indicate a user group service; and the apparatus further comprises a processing unit, wherein
the processing unit is configured to determine a network function NF type based on the indication information;
the sending unit is further configured to send a query message to a network function repository function network element, wherein the query message comprises the NF type; and
the receiving unit is further configured to receive an access identifier of the user group management function network element from the network function repository function network element.

28. The apparatus according to claim 25, wherein the apparatus is a user plane function network element, and the communications device is a first terminal;
that the receiving unit is configured to receive a first message from a communications device specifically comprises: receiving first user plane data from the first terminal, wherein the first user plane data comprises the first message; and
that the sending unit is configured to send the identifier of the user group to the communications device specifically comprises: sending second user plane data to the first terminal, wherein the second user plane data comprises the identifier of the user group.

29. The apparatus according to claim 25, wherein the apparatus is a network exposure function network element, and the communications device is an application function device;
that the receiving unit is configured to receive a first message from a communications device specifically comprises: receiving a first data packet from the application function device, wherein the first data packet comprises the first message; and
that the sending unit is configured to send the identifier of the user group to the communications device specifically comprises: sending a second data packet to the first terminal, wherein the second data packet comprises the identifier of the user group.

30. The apparatus according to any one of claims 25 to 29, wherein the first message further comprises a second terminal list, the second terminal list comprises an identifier of at least one second terminal, and the identifier of the at least one second terminal is an identifier of a terminal requesting to join the user group; and the sending unit is further configured to send a third terminal list to the terminal, wherein the third terminal list comprises an identifier of a terminal that is in the second terminal and that is allowed to join the user group.

31. The apparatus according to any one of claims 25 to 27, wherein the apparatus is an access and mobility management function network element, and the apparatus further comprises the processing unit, wherein
the processing unit is configured to: obtain a third terminal list and the identifier of the user group that are from the user group management function network element, wherein the third terminal list comprises an identifier of a terminal allowed to join the user group; and page the terminal corresponding to the terminal identifier in the third terminal list, and establish a connection to the terminal; and
the sending unit is further configured to send the identifier of the user group to the terminal.

32. An apparatus, comprising a receiving unit and a sending unit, wherein
the sending unit is configured to send a first message to a user group management function network element, wherein the first message comprises a request type and an identifier of the apparatus, and the request type is used to request to establish a user group; and
the receiving unit is configured to receive an identifier that is of the user group and that is generated by the user group management function network element.

33. The apparatus according to claim 32, wherein the first message further comprises a second terminal list, the second terminal list comprises an identifier of at least one second terminal, and the identifier of the at least one second terminal is an identifier of a terminal requesting to join the user group; and
the receiving unit is further configured to receive a third terminal list from the user group management function network element, wherein the third terminal list comprises an identifier of a terminal that is in the second terminal and that is allowed to join the user group.

34. The apparatus according to claim 33, wherein the apparatus is an application function device; and
the sending unit is further configured to send the identifier of the user group to the terminal corresponding to the terminal identifier in the third terminal list.

35. The apparatus according to any one of claims 32 to 34, wherein the receiving unit is further configured to receive user group authentication information from the user group management function network element, wherein the user group authentication information is used to verify authorization of the terminal requesting to join the user group.

36. The apparatus according to any one of claims 32 to 35, wherein the apparatus is a first terminal or an application function device.

37. A user group establishment apparatus, comprising a communications interface and at least one processor, wherein the communications interface and the at least one processor are interconnected by using a line, and the communications interface is configured to perform message sending and receiving operations performed on the apparatus side in the method according to any one of claims 1 to 6; and
the at least one processor invokes an instruction, to perform a message processing or control operation performed on the apparatus in the method according to any one of claims 1 to 6.

38. A user group establishment apparatus, comprising a communications interface and at least one processor, wherein the communications interface and the at least one processor are interconnected by using a line, and the communications interface is configured to perform message sending and receiving operations performed on the apparatus side in the method according to any one of claims 7 to 13; and
the at least one processor invokes an instruction, to perform a message processing or control operation performed on the apparatus side in the method according to any one of claims 7 to 13.

39. A user group establishment apparatus, comprising a communications interface and at least one processor, wherein the communications interface and the at least one processor are interconnected by using a line, and the communications interface is configured to perform message sending and receiving operations performed on the apparatus side in the method according to any one of claims 14 to 18; and
the at least one processor invokes an instruction, to perform a message processing or control operation performed on the apparatus side in the method according to any one of claims 14 to 18.

40. A chip system, wherein the chip system comprises at least one processor and an interface circuit, the interface circuit and the at least one processor are interconnected by using a line, and the processor runs an instruction to perform the method according to any one of claims 1 to 6.

41. A chip system, wherein the chip system comprises at least one processor and an interface circuit, the interface circuit and the at least one processor are interconnected by using a line, and the processor runs an instruction to perform the method according to any one of claims 7 to 13.

42. A chip system, wherein the chip system comprises at least one processor and an interface circuit, the interface circuit and the at least one processor are interconnected by using a line, and the processor runs an instruction to perform the method according to any one of claims 14 to 18.

43. A user group establishment apparatus, configured to perform the method according to any one of claims 1 to 6.

44. A user group establishment apparatus, configured to perform the method according to any one of claims 7 to 13.

45. A user group establishment apparatus, configured to perform the method according to any one of claims 14 to 18.

46. A computer program product comprising an instruction, wherein when the computer program product runs on a computer, the computer is enabled to perform the method according to any one of claims 1 to 6.

47. A computer program product comprising an instruction, wherein when the computer program product runs on a computer, the computer is enabled to perform the method according to any one of claims 7 to 13.

48. A computer program product comprising an instruction, wherein when the computer program product runs on a computer, the computer is enabled to perform the method according to any one of claims 14 to 18.

49. A computer-readable storage medium, comprising an instruction, wherein when the instruction is run on a computer, the computer is enabled to perform the method according to any one of claims 1 to 6.

50. A computer-readable storage medium, comprising an instruction, wherein when the instruction is run on a computer, the computer is enabled to perform the method according to any one of claims 7 to 13.

51. A computer-readable storage medium, comprising an instruction, wherein when the instruction is run on a computer, the computer is enabled to perform the method according to any one of claims 14 to 18.

52. A communications system, comprising the apparatus according to any one of claims 19 to 24 and the apparatus according to any one of claims 32 to 36.

53. The system according to claim 52, wherein the system further comprises the apparatus according to any one of claims 25 to 31.
